# EUROPÄISCHE PATENTSCHRIFT

(11) **EP 0 373 557 B1**
(45) Veröffentlichungstag und Bekanntmachung des Hinweises auf die Patenterteilung: **01.03.1995**
(21) Anmeldenummer: 89122818.1
(22) Anmeldetag: 11.12.1989
(51) Int. Cl.: G21F 9/32, G21F 9/16, C03B 5/04

(54) **Verfahren zum Betreiben eines Glasschmelzofens**
Process for operating a glass melting furnace
Procédé d'exploitation d'un four de fusion du verre

(30) Priorität: 13.12.1988 DE 3841918; 03.02.1989 DE 3903194; 14.04.1989 DE 3912311
(43) Veröffentlichungstag der Anmeldung: 20.06.1990
(73) Patentinhaber: BETEILIGUNGEN SORG GMBH & CO. KG, D-97816 Lohr am Main (DE)
(72) Erfinder: Pieper, Helmut, Dipl.-Ing., D-8770 Lohr/Main (DE); Sorg, Helmut, Dipl.-Ing., D-8752 Glattbach (DE); Zschocher, Hartmut, Dr.-Ing., D-8770 Lohr/Main (DE)
(74) Vertreter: Schulze Horn, Stefan, Dipl.-Ing. M.Sc.

(56) Entgegenhaltungen:
- EP-A- 0 145 350
- US-A- 4 632 690
- US-A- 4 652 289
- US-A- 4 666 490

## Beschreibung

Die Erfindung betrifft ein Verfahren zum Betreiben eines Glasschmelzofens, insbesondere für das Verglasen von umweltgefährdenden Abfallstoffen, wie Asbest oder asbesthaltiges Abbruchmaterial, Klärschlämme, Lackschlämme, Aschen, Filterstäube und dergleichen, wobei sich im Betrieb des Ofens in diesem eine Glasschmelze und darüber eine die Abfallstoffe enthaltende Gemengeschicht befinden, wobei das Gemenge von außen her in das Ofeninnere zugeführt und von oben auf die Glasschmelze aufgelegt wird, wobei durch Heizeinrichtungen im Glasschmelzofen die erforderliche Wärmeenergie erzeugt wird und wobei durch einen Auslauf das aus den Abfallstoffen und Zuschlägen geschmolzene Glas aus dem Ofen abgezogen wird.

Aus EP-A-0 145 350 ist ein gattungsgemäßes Verfahren bekannt, bei dem ebenfalls ein Abfallstoff, wie Asbest, in eine Glasschmelze eingebracht wird, um ein stabiles Glas zu gewinnen. Auch bei diesem Verfahren wird die Abfallstoffe enthaltendes Gemenge von oben zugegeben und auf die Oberfläche der Glasschmelze aufgelegt. Als nachteilig wird bei diesem bekannten Verfahren angesehen, daß der Energiebedarf im Verhältnis zur Schmelzleistung relativ hoch ist, weil der Wärmeübergang aus der Glasschmelze in das darauf aufgelegte Gemenge begrenzt ist, wodurch relativ lange Zeit für das Aufschmelzen von neu zugeführtem Gemenge benötigt wird. Zudem enthalten die entstehenden, aus der Glasschmelze und aus dem schmelzenden Gemenge austretenden Abgase noch relativ große Mengen an Schadstoffen, die eine nachfolgende Reinigung und Behandlung der Abgase erforderlich machen, um die Schadstoffe abzutrennen bzw. unschädlich zu machen, was die Durchführung dieses bekannten Verfahrens insgesamt verteuert.

Aus US-A-4 652 289 ist ein Verfahren zur Behandlung von Abgasen bekannt, die beispielsweise aus einem Glasschmelzofen zum Einschmelzen radioaktiver Abfälle austreten. Bei diesem bekannten Verfahren werden die Abgase durch eine Aufgabevorrichtung zum Einführen von aufzuschmelzendem Gemenge geleitet, wobei sich Abgase und Gemenge im Gegenstrom zueinander bewegen. Dabei kühlen sich die Abgase ab und darin enthaltene kondensierbare Bestandteile lagern sich an die Partikel des Gemenges an. Nachteilig ist bei diesem Verfahren, daß es einerseits einen hohen apparativen Aufwand für seine Durchführung erfordert und daß es andererseits infolge der Anlagerung von kondensierenden Bestandteilen aus dem Abgas zu Verbackungen und Verklumpungen des Gemenges kommt, wodurch die Förderung des Gemenges auf die Glasschmelze gestört oder ganz verhindert werden kann.

Es stellt sich daher die Aufgabe, ein Verfahren der eingangs genannten Art zu schaffen, bei dem die Abgasmengen und der Energiebedarf vermindert werden und bei dem eine verbesserte Kosten-Nutzen-Bilanz erreicht wird.

Die Lösung dieser Aufgabe gelingt durch ein Verfahren der eingangs genannten Art, welches dadurch gekennzeichnet ist, daß auf der Oberfläche der Glasschmelze eine flüssige Alkalisalz- oder Erdalkalisalz-Galleschicht erzeugt wird und daß entweder sowohl die Schichtdicke der Galleschicht wie die Schichtdicke der Gemengeschicht oder nur die Schichtdicke der Galleschicht in einem gewünschten Schichtdickenbereich gehalten wird, wobei die Schichtdicke der Galleschicht durch bedarfsweisen Abzug von Galle so eingestellt wird,daß ein hoher Wärmeübergang zwischen der Glasschmelze und der pulverigen Gemengeschicht erreicht wird und wobei die Schichtdicke der Gemengeschicht durch geregeltes Einlegen und Verteilen von Gemenge so eingestellt wird, daß sie mehr als 5 cm beträgt und daß in der Gemengeschicht ein so hoher Temperaturgradient entsteht, daß der Oberofen eine niedrigere Temperatur aufweist, so daß fast alle aus der Galleschicht und der Glasschmelze entweichenden kondensierbaren Bestandteile in der Gemengeschicht kondensieren und so unmittelbar innerhalb des Prozesses zurückgeführt werden.

Durch die Galleschicht wird ein wesentlich verbesserter Wärmeübergang aus der Glasschmelze in das aufzuschmelzende Gemenge erreicht, was den Energiebedarf für die Durchführung des Verfahrens vermindert bzw. den mit dem Verfahren erreichbaren Durchsatz erhöht. Außerdem werden große Anteile der beim Schmelzvorgang aus dem Gemenge austretenden Stoffe, insbesondere Chloride und Sulfate, in die Galleschicht eingebunden, so daß nur noch wesentlich geringere Abgasmengen entstehen. Der Aufwand und die Kosten für die Abgasreinigung werden dadurch deutlich vermindert. Die aus dem Glasschmelzofen abgezogene Galle kann nach Abkühlung und Erstarrung relativ einfach zu trockenen und sauberen Salzen aufbereitet und einer Weiterverwendung oder Deponierung zugeführt werden. Die beim Schmelzvorgang anfallenden Metalloxide gehen ohne besondere Maßnahmen praktisch vollständig in die Glasschmelze über und werden so in die später entstehenden Glaskörper fest eingebaut. Schließlich wird mit dem neuen Verfahren erreicht, daß eine Verdampfung von Schwermetallen und Alkali-Anteilen an der Oberfläche der Glasschmelze durch die dort erzeugte Galleschicht und die dort gegebenenfalls befindliche definierte Gemengeschicht verhindert wird. Dadurch werden eine weitere Verringerung der Abgasmengen und eine geringere Schädlichkeit der Abgase erreicht. Dadurch, daß die Schichtdicke der auf der flüssigen Glasschmelze aufliegenden Gemengeschicht so eingestellt wird, daß in der Schicht ein so hoher Temperaturgradient entsteht, daß der Oberofen eine niedrigere Temperatur aufweist, so daß fast alle aus der Galleschicht und der Glasschmelze entweichenden kondensierbaren Bestandteile in der Gemengeschicht kondensieren und so unmittelbar im Prozeß zurückgeführt werden, wird die Menge des entstehenden Abgases vermindert und das Abgas wird von mehreren bei üblichen Verfahren anfallenden Schadstofen von Anfang an entlastet, was die spätere Abgasreinigung einfacher macht. Die Dicke der Galleschicht wird dabei so eingestellt, daß ein hoher Wärmeübergang zwischen Glasschmelze und der pulvrigen Gemengeschicht erreicht wird. Dem entspricht in den meisten praktischen Anwendungsfällen des Verfahrens ein bevorzugter Schichtdickenbereich der Galleschicht zwischen etwa 2 und 5 cm. Hiermit korrespondiert ein optimaler Schichtdickenbereich des Gemenges von mehr als 5 cm.

Die im Anspruch 2 angegebenen Zusammensetzungen der Galleschicht bieten den Vorteil, daß die für deren Erzeugung aufzubringenden Zusatzkosten, insbesondere für spezielle Zuschlagstoffe, sehr niedrig gehalten werden. Diese Zusatzkosten sind nur gering im Vergleich zu den Kosten, die bei der Abgasreinigung eingespart werden können, so daß das ganze Verfahren insgesamt kostengünstig durchführbar ist.

Bezüglich des in den Glasschmelzofen einzuführenden Gemenges ist vorgesehen, daß dieses ein Gemisch aus den Abfallstoffen sowie alkalihaltigem Ergußgestein, insbesondere Phonolit, und SiO₂-haltigen Stoffen, insbesondere Quarzsand, ist. Diese Zuschlagstoffe sind geologisch weit verbreitet auffindbar, einfach gewinnbar und handhabar sowie kostengünstig. Alternativ oder ergänzend können auch Glasscherben als SiO₂-haltiger Zuschlagstoff eingesetzt werden. Bei der Anwendung des Verfahrens gemäß der vorliegenden Erfindung kann erwartet werden, daß das Ergußgestein und die SiO₂-haltigen Stoffe zusammen nur einen Anteil von maximal 30 Gewichts-% am gesamten Gemenge haben. Die Zuschlagstoffe machen also nur den kleineren Teil des Gemenges aus, während der Hauptteil des Gemenges durch die Abfallstoffe gebildet wird. Mit dem vorliegenden Verfahren können also auch große Mengen an Abfallstoffen wirtschaftlich verglast werden.

Eine weitere Verminderung der Umweltbelastung wird dadurch erreicht, daß im laufenden Betrieb des Glasschmelzofens die erforderliche Wärmeenergie allein durch in die Glasschmelze hineinragende Heizelektroden elektrisch erzeugt wird. Die Schmelzwärme wird also dem Gemenge aus der Glasschmelze über die Galleschicht zugeführt. Dadurch bleibt das Gemenge in seinem oberen Teil relativ kühl, was ebenfalls dazu beiträgt, eine Verdampfung von Gemengebestandteilen zu verhindern und eine Kondensation von aus der Glasschmelze oder der Galleschicht aufsteigenden Dämpfen sicherzustellen. Es können auch Heizeinrichtungen für fossile Brennstoffe vorgesehen sein, doch kämen diese dann nur während der Anfahr-Phase des Glasschmelzofens zum Einsatz, um eine erste Glasschmelzefüllung, vorzugsweise aus abfallstoffreiem Gemenge, zu erzeugen.

Weiter sieht das Verfahren vor, daß der bedarfsweise Abzug von Galle aus dem Glasschmelzofen im wesentlichen horizontal erfolgt und daß das erschmolzene Glas unter Beibehaltung eines gleichbleibenden Glasschmelzestandes im Ofen gesondert abgezogen wird. Hierdurch wird erreicht, daß eine gegenseitige Störung der Abzugs-Vorgänge für Galle und Glas weitestgehend ausgeschlossen wird, so daß das Abziehen mit hoher Genauigkeit hinsichtlich des einzuhaltenden Glasschmelzestandes und der Galleschichtdicke im Glasschmelzofen erfolgen kann.

In diesem Zusammenhang ist weiterhin vorgesehen, daß der Abzug des Glases ofeninnenseitig direkt aus der Tiefe der Schmelze erfolgt. Hierdurch werden Störungen oder Turbulenzen an der Oberfläche der Glasschmelze sicher vermieden. Eine bevorzugte Möglichkeit für das Abziehen der Schmelze aus der Tiefe besteht darin, daß dies durch einen Bodenauslauf erfolgt.

Außerdem sieht die Erfindung noch vor, daß für den Abzug der Galle und für den Abzug des Glases vorgesehene Ofenauslässe beheizt werden. Hierdurch wird sichergestellt, daß eine unerwünschte vorzeitige Erstarrung von Galle oder Glas verhindert wird und daß auch ohne direkte Messung der Höhe des Glasschmelzestandes und der Galleschichtdicke diese mit der erforderlichen Genauigkeit eingehalten bzw. geregelt werden können.

Um mechanisch zu bewegende Mittel für die Regelung der Galleschichtdicke und des Glasschmelzestandes im Glasschmelzofen zu vermeiden und um aber dennoch einen unmittelbaren Einfluß auf diese Größen nehmen zu können, ist gemäß Erfindung zum einen vorgesehen, daß die Menge der abgezogenen Galle und damit die Galleschichtdicke im Glasschmelzofen durch Anlegen eines mehr oder weniger starken Vakuums im zugehörigen Auslaß geregelt wird, und zum anderen vorgesehen, daß die Menge des abgezogenen Glases und damit die Höhe des Glasschmelzestandes im Glasschmelzofen durch Anlegen eines mehr oder weniger starken Vakuums im zugehörigen Auslaß geregelt wird. Hierdurch wird eine sehr einfache, betriebssichere und ausreichend genaue Regelung von Galleschichtdicke und Glasschmelzestand im Glasschmelzofen ermöglicht.

Eine alternative Verfahrensusgestaltung sieht für den bedarfsweisen Abzug von Galle aus dem Glasschmelzofen vor, daß dies diskontinuierlich durch Abstechen erfolgt. Diese Verfahrensvariante ist mit geringem Aufwand technisch durchführbar und in ähnlicher Form aus der Metallurgie bekannt.

Außerdem ist noch vorgesehen, daß von Zeit zu Zeit vom tiefsten Punkt des Glasschmelzofens die dort angesammelte Schwermetall-Schmelze abgezogen wird. Hierdurch wird erreicht, daß das erschmolzene und abgezogene Glas nicht unnötig mit Schwermetallen belastet wird. Die abgezogenen Schwermetalle können entweder gesondert deponiert oder nach Aufbereitung auch weiterverwendet werden.

Schließlich ist für die Betriebsweise des Glasschmelzofens hinsichtlich der in seinem Oberofen herrschenden Temperaturen noch vorgesehen, daß die Temperatur des Abgases beim Verlassen des Glasschmelzofens zwischen 80 und 400°C, vorzugsweise zwischen 100 und 200°C beträgt.

Insgesamt wird mit dem neuen Verfahren das Verglasen von umweltgefährdenden Abfallstoffen vergleichsweise wirtschaftlich bei zugleich hoher Betriebssicherheit und geringer Umweltbelastung sowohl durch das Verfahren selbst als auch durch die entstehenden Produkte.

## Patentansprüche

1. Verfahren zum Betreiben eines Glasschmelzofens, insbesondere für das Verglasen von umweltgefährdenden Abfallstoffen, wie Asbest oder asbesthaltiges Abbruchmaterial, Klärschlämme, Lackschlämme, Aschen, Filterstäube und dergleichen, wobei sich im Betrieb des Ofens in diesem eine Glasschmelze und darüber eine die Abfallstoffe enthaltende Gemengeschicht befinden, wobei das Gemenge von außen her in das Ofeninnere zugeführt und von oben auf die Glasschmelze aufgelegt wird, wobei durch Heizeinrichtungen im Glasschmelzofen die erforderliche Wärmeenergie erzeugt wird und wobei durch einen Auslauf das aus den Abfallstoffen und Zuschlägen geschmolzene Glas aus dem Ofen abgezogen wird,
**dadurch gekennzeichnet,**
daß auf der Oberfläche der Glasschmelze eine flüssige Alkalisalz- oder Erdalkalisalz-Galleschicht erzeugt wird und daß entweder sowohl die Schichtdicke der Galleschicht wie die Schichtdicke der Gemengeschicht oder nur die Schichtdicke der Galleschicht in einem gewünschten Schichtdickenbereich gehalten wird, wobei die Schichtdicke der Galleschicht durch bedarfsweisen Abzug von Galle so eingestellt wird, daß ein hoher Wärmeübergang zwischen der Glasschmelze und der pulverigen Gemengeschicht erreicht wird und wobei die Schichtdicke der Gemengeschicht durch geregeltes Einlegen und Verteilen von Gemenge so eingestellt wird, daß sie mehr als 5 cm beträgt und daß in der Gemengeschicht ein so hoher Temperaturgradient entsteht, daß der Oberofen eine niedrigere Temperatur aufweist, so daß fast alle aus der Galleschicht und der Glasschmelze entweichenden kondensierbaren Bestandteile in der Gemengeschicht kondensieren und so unmittelbar innerhalb des Prozesses zurückgeführt werden.

2. Verfahren nach Anspruch 1, dadurch gekennzeichnet, daß als Galleschicht eine im wesentlichen aus Kalziumsulfat und/oder Kalziumchlorid, Magnesiumsulfat und/oder Magnesiumchlorid, Natriumsulfat und/oder Natriumchlorid, Kaliumsulfat und/oder Kaliumchlorid, Lithiumsulfat und/oder Lithiumchlorid oder aus einem Gemisch von diesen bestehende Galleschicht verwendet wird und daß diese Galleschicht während des Schmelzvorganges durch Schmelzen bzw. Umsetzung aus Kalziumsulfat, Kalziumchlorid, Magnesiumsulfat und/oder Magnesiumchlorid erzeugt wird, welches mit den Abfallstoffen und/oder als gesonderter Zuschlagstoff zum Gemenge dem Schmelzvorgang zugeführt wird.

3. Verfahren nach Anspruch 1 oder 2, dadurch gekennzeichnet, daß in den Glasschmelzofen als Gemenge ein Gemisch aus den Abfallstoffen sowie alkalihaltigem Ergußgestein, insbesondere Phonolit, und SiO₂-haltigen Stoffen, insbesondere Quarzsand, eingeführt wird.

4. Verfahren nach wenigstens einem der Ansprüche 1 bis 3, dadurch gekennzeichnet, daß im laufenden Betrieb des Glasschmelzofens die erforderliche Wärmeenergie allein durch in die Glasschmelze hineinragende Heizelektroden elektrisch erzeugt wird.

5. Verfahren nach wenigstens einem der Ansprüche 1 bis 4, dadurch gekennzeichnet, daß der bedarfsweise Abzug von Galle aus dem Glasschmelzofen im wesentlichen horizontal erfolgt und daß das erschmolzene Glas unter Beibehaltung eines gleichbleibenden Glasschmelzestandes im Ofen gesondert abgezogen wird.

6. Verfahren nach wenigstens einem der Ansprüche 1 bis 5, dadurch gekennzeichnet, daß der Abzug des Glases ofeninnenseitig direkt aus der Tiefe der Schmelze erfolgt.

7. Verfahren nach Anspruch 6, dadurch gekennzeichnet, daß der Abzug des Glases durch einen Bodenauslauf erfolgt

8. Verfahren nach wenigstens einem der Ansprüche 1 bis 7, dadurch gekennzeichnet, daß für den Abzug der Galle und für den Abzug des Glases vorgesehene Ofenauslässe beheizt werden.

9. Verfahren nach wenigstens einem der Ansprüche 1 bis 8, dadurch gekennzeichnet, daß die Menge der abgezogenen Galle und damit die Galleschichtdicke im Glasschmelzofen durch Anlegen eines mehr oder weniger starken Vakuums im zugehörigen Auslaß geregelt wird.

10. Verfahren nach wenigstens einem der Ansprüche 1 bis 9, dadurch gekennzeichnet, daß die Menge des abgezogenen Glases und damit die Höhe des Glasschmelzestandes im Glasschmelzofen durch Anlegen eines mehr oder weniger starken Vakuums im zugehörigen Auslaß geregelt wird.

11. Verfahren nach wenigstens einem der Ansprüche 1 bis 8, dadurch gekennzeichnet, daß der bedarfsweise Abzug von Galle aus dem Glasschmelzofen diskontinuierlich durch Abstechen erfolgt.

12. Verfahren nach wenigstens einem der Ansprüche 1 bis 11, dadurch gekennzeichnet, daß von Zeit zu Zeit vom tiefsten Punkt des Glasschmelzofens die dort angesammelte Schwermetall-Schmelze abgezogen wird.

13. Verfahren nach wenigstens einem der Ansprüche 1 bis 12, dadurch gekennzeichnet, daß die Temperatur des Abgases beim Verlassen des Glasschmelzofens zwischen 80 und 400°C, vorzugsweise zwischen 100 und 200°C beträgt.

## Claims

1. Process for operating a glass melting furnace particularly for the vitrification of waste harmful to the environment like asbestos or demolition material containing asbestos, slurry, lacquer sludge, ashes, filter dust, and the like wherein during the operation of the furnace a glass melt is contained therein with a layer of glass batch thereabove containing the waste materials wherein the glass batch is fed from the outside into the interior of the furnace and is placed onto the glass melt from the top wherein the heat energy required is generated by heating devices in the glass melting furnace, and wherein the glass molten out of the waste and flux material is extracted out of the furnace through an output opening,
**characterized in**
that a liquid salts layer of alkali salts or alkaline earth salts is generated on the surface of the glass melt, and that either both the thickness of the salts layer and the thickness of the glass batch layer or only the thickness of the salts layer is kept in a required range of thickness wherein the thickness of the salts layer is controlled by extracting the salts if requested such, that a high heat transfer between the glass melt and the powdery glass batch layer is attained, and wherein the thickness of the glass batch layer is adjusted by controlled feeding and distributing of glass batch such, that the thickness is more than 5 cm, and that such a high temperature gradient is created in the glass batch layer, that the upper furnace comprises a lower temperature such, that almost all condensable constituents leaving the salts layer and the glass melt will condense in the glass batch layer and thus are recycled in the process.

2. Process according to claim 1, characterized in that as a salts layer a layer consisting substantially of calcium sulfate and/or calcium chloride, magnesium sulfate and/or magnesium chloride, sodium sulfate and/or sodium chloride, potassium sulfate and/or potassium choride, lithium sulfate and/or lithium chloride or of a mixture of these components is used, and that during the melting process this salts layer is generated by melting or reacting, respectively, out of calcium sulfate, calcium chloride, magnesium sulfate and/or magnesium chloride which is fed to the glass batch and to the melting process together with the waste and/or as a separate flux powder.

3. Process according to claim 1 or 2, characterized in that as a glass batch a mixture of the waste material and alkali containing extrusive rocks, particularly phonolite, and SiO₂ containing material, particularly glass sand is fed into the glass melting furnace.

4. Process according to at least one of the claims 1 to 3, characterized in that during the operation of the glass melting furnace the heat energy required is only electrically generated by the heating electrodes protruding into the glass melt.

5. Process according to at least one of the claims 1 to 4, characterized in that the eventually required extraction of salts out of the glass melting furnace is substantially achieved horizontally, and that the molten glass is separately extracted while maintaining a constant level of glass melt in the furnace.

6. Process according to at least one of the claims 1 to 5, characterized in that in the interior of the furnace the glass is extracted directly out of the depth of the glass melt.

7. Process according to claim 6, characterized in that the glass is extracted through an output opening in the bottom.

8. Process according to at least one of the claims 1 to 7, characterized in that the furnace output openings provided for the glass and for the salts are heated.

9. Process according to at least one of the claims 1 to 8, characterized in that the amount of the extracted salts and thereby the thickness of the salts layer in the glass melting furnace is controlled by applying a variable vacuum to the respective opening.

10. Process according to at least one of the claims 1 to 9, characterized in that the amount of the extracted glass and thereby the level of the glass melt in the glass melting furnace is controlled by applying a variable vacuum to the respective opening.

11. Process according to at least one of the claims 1 to 8, characterized in that the eventually required extraction of salts out of the glass melting furnace is discontinuously achieved by tapping.

12. Process according to at least one of the claims 1 to 11, characterized in that from time to time the heavy metal melt collected at the deepest point of the glass melting furnace is extracted therefrom.

13. Process according to at least one of the claims 1 to 12, characterized in that the temperature of the exhaust gas when leaving the glass melting furnace is between 80°C and 400°C, preferably between 100°C and 200°C.

## Revendications

1. Procédé de mise en oeuvre d'un four à vitrifier, principalement pour la vitrification de déchets nuisibles pour l'environnement tels que déchets d'amiante ou gravats renfermant de l'amiante, boues de décantation, résidus de peinture, cendres, résidus de filtration et similaires, dans lequel se trouvent une masse vitreuse et en outre une couche de matériaux, renfermant les déchets, celle-ci étant introduite de l'extérieur, puis recouverte de la masse vitreuse fondue, l'apport de chaleur dans le four permettant de disposer de l'énergie nécessaire, la couche de déchets et la masse vitreuse ajoutée étant extraits du four par écoulement, caractérisé en ce que l'on forme un enrobage de la surface externe de la couche vitreuse au moyen de sels alcalins ou alcalino-terreux fondus et en ce que l'épaisseur de l'enrobage ainsi que l'épaisseur de la couche de matériau divers sont dans un domaine voulu, l'épaisseur de la couche d'enrobage est réglée par soustraction appropriée de l'enrobage de façon à obtenir une excellente transmission de chaleur entre la couche vitreuse et le mélange de déchets pulvérulent, l'épaisseur de la couche de déchets étant ajustée par un dépôt et une répartition telles qu'elle soit supérieure à 5 cm et qu'il existe un gradient de température dans la couche de déchets tel que le haut du four soit à une température plus basse et de sorte que la quasi totalité de la partie condensable et mobile de la couche d'enrobage et de la couche vitreuse se condensent dans la couche de déchets et qu'ils restent immédiatement à l'intérieur du système.

2. Procédé selon la revendication 1, caractérisé en ce que, en tant que couche d'enrobage, on utilise de préférence un enrobage de sulfate de calcium et/ou chlorure de calcium, de sulfate de magnésium et/ou chlorure de magnésium, de sulfate de sodium et/ou chlorure de sodium, de sulfate de potassium et/ou chlorure de potassium, de sulfate de lithium et/ou chlorure de lithium ou leurs mélanges et en ce que l'on obtient cette couche d'enrobage pendant la vitrification par la fusion, c'est à dire le changement d'état, du sulfate de calcium, chlorure de calcium, sulfate de magnésium et/ou chlorure de magnésium, lesquels sont ajoutés avec les déchets et/ou en tant qu'ajout séparé pendant le déroulement du processus de vitrification.

3. Procédé selon la revendication 1 ou 2, caractérisé en ce que, en tant que déchets à traiter dans le four à vitrifier, on utilise un mélange de déchets tels que débris de roches effusives alcalines, en particulier la phonolite, et des matériaux renfermant SiO₂-, en particulier le sable quartzeux.

4. Procédé selon une quelconque des revendications 1 à 3, caractérisé en ce que l'énergie thermique nécessaire est obtenue seulement électriquement par l'intermédiaire d'électrodes plongeant dans la masse vitrifiée pendant le fonctionnement du four de vitrification.

5. Procédé selon une ou plusieurs des revendications 1 à 4, caractérisé en ce que la nécessaire sortie de l'enrobage du four de vitrification se fait pratiquement à l'horizontale et que le verre fondu se sépare à part en conservant en permanence son état fondu.

6. Procédé selon une ou plusieurs des revendications 1 à 5, caractérisé en ce que la sortie de verre s'effectue plus ou moins directement du fond de la masse fondue.

7. Procédé selon une ou plusieurs des revendications 1 à 6, caractérisé en ce que la sortie du verre s'effectue par un trou de coulée.

8. Procédé selon une ou plusieurs des revendications 1 à 7, caractérisé en ce que pour faire sortir l'enrobage et la masse vitreuse, les trous de coulée du four sont chauffés.

9. Procédé selon une ou plusieurs des revendications 1 à 8, caractérisé en ce que la quantité, et donc l'épaisseur, de la couche d'enrobage extrait du four à vitrifier est réglée par l'application d'un vide plus ou moins poussé au trou de coulée y afférent.

10. Procédé selon une ou plusieurs des revendications 1 à 8, caractérisé en ce que la quantité et donc, l'épaisseur, de la couche vitrifiée dans le four est réglée par l'application d'un vide plus ou moins poussé au trou de coulée y afférent.

11. Procédé selon une ou plusieurs des revendications 1 à 8, caractérisé en ce que la sortie de l'enrobage du four de vitrification s'effectue par coulée en mode discontinu.

12. Procédé selon une ou plusieurs des revendications 1 à 11, caractérisé en ce que, de temps en temps on retire du four la masse fondue à base de métaux lourds rassemblée au plus profond du four.

13. Procédé selon une ou plusieurs des revendications 1 à 12, caractérisé en ce que la température des gas de sortie du four est comprise entre 80 et 400°C, particulièrement entre 100 et 200°C.
